# EUROPÄISCHE PATENTSCHRIFT

(11) **EP 3 619 060 B1**
(45) Veröffentlichungstag und Bekanntmachung des Hinweises auf die Patenterteilung: **26.01.2022**
(21) Anmeldenummer: 18723774.8
(22) Anmeldetag: 03.05.2018
(51) Int. Cl.: B60D 1/62, B60D 1/24, B62D 13/06, B60R 1/00

(54) **VERFAHREN ZUR ERMITTLUNG DES KNICKWINKELS EINES GESPANNS**
METHOD FOR DETERMINING THE ARTICULATION ANGLE OF A COMBINATION
PROCÉDÉ POUR DÉTERMINER L'ANGLE D'ARTICULATION D'UN ATTELAGE

(30) Priorität: 03.05.2017 DE 102017207438
(43) Veröffentlichungstag der Anmeldung: 11.03.2020
(73) Patentinhaber: Volkswagen Aktiengesellschaft, 38440 Wolfsburg (DE)
(72) Erfinder: JÄHNISCH, Marco, 10318 Berlin (DE); BERGER, Oliver, 14532 Kleinmachnow (DE); ERFURTH, Christoph, 12099 Berlin (DE)
(86) Internationale Anmeldenummer: PCT/EP2018/061321
(87) Internationale Veröffentlichungsnummer: WO 2018/202762

(56) Entgegenhaltungen:
- WO-A1-2012/103193
- WO-A1-2016/119920
- DE-B3-102011 101 990

## Beschreibung

### Verfahren und Vorrichting zur Ermittlung des Knickwinkels eines Gespanns

Die Erfindung betrifft ein Verfahren zur Ermittlung des Knickwinkels eines Gespanns bei einem Anhängerrangierassistenten, eine entsprechende Vorrichtung zur Ermittlung des Knickwinkels eines Gespanns und eine entsprechende Vorrichtung zur Ermittlung des Knickwinkels eines Gespanns.

Bei einem Anhängerrangierassistenten zum Rangieren eines Gespanns bestehend aus einem Zugfahrzeug und einem daran angekoppelten Anhänger wird mittels einer Rückfahrkamera der Anhänger des Gespanns und insbesondere dessen Deichsel beobachtet, um anhand der Deichsel den Knickwinkel des Anhängers zum Zugfahrzeug bestimmen zu können, dessen Kenntnis zum erfolgreichen Rangieren des Gespanns notwendig ist.

Die Druckschrift DE 10 2011 101 990 B3 betrifft ein Verfahren und eine Vorrichtung zur Bestimmung eines relativen Deichselwinkels in einem Gliederzug, wobei der Gliederzug ein Zugteil und einen Anhänger umfasst, wobei
- der Zugteil und der Anhänger über eine drehbar gelagerte Deichsel mechanisch gekoppelt sind,
- die Vorrichtung mindestens eine Einrichtung zur Bilderfassung und mindestens eine Auswerteeinrichtung umfasst,
- die Einrichtung zur Bilderfassung ein zweidimensionales Bild erfasst, wobei in das Bild zumindest ein Teil der Deichsel abgebildet wird,
- mittels der Auswerteeinrichtung zu einem ersten Zeitpunkt einem ersten Bild ein erster Intensitäts- und/oder Farbverlauf entlang mindestens einer ersten Trajektorie bestimmbar ist,
- die erste Trajektorie einen Kreisbogen um einen Drehpunkt der Deichsel abbildet, wobei zu mindestens einem weiteren Zeitpunkt in einem weiteren Bild ein weiterer Intensitäts- und/oder Farbverlauf entlang der ersten Trajektorie bestimmbar ist,
- ein Ähnlichkeitsmaß zwischen dem ersten Intensitäts- und/oder Farbverlauf entlang der mindestens ersten Trajektorie in dem ersten Bild und einer Anzahl verschobener weiterer Intensitäts- und/oder Farbverläufe entlang der mindestens ersten Trajektorie in dem weiteren Bild bestimmbar ist, und
- die verschobenen weiteren Intensitäts- und Farbverläufe entlang der mindestens ersten Trajektorie in dem weiteren Bild verschoben werden und der relative Deichselwinkel in Abhängigkeit der Ähnlichkeitsmaße bestimmt wird.

Bei Anhängerrangierassistenten, die zur Ermittlung des Knickwinkels zwischen Anhänger und Zugfahrzeug eine Auswertung der Bilder einer Rückfahrkamera vornehmen, ergibt sich das Problem, dass die verwendeten Kantendetektionsverfahren zur Bestimmung des Knickwinkels bei Schlagschatten im Bild nicht robust und zuverlässig arbeiteten.

Die Druckschrift DE 101 60 719 B4 betrifft ein Verfahren und eine entsprechende Vorrichtung zur Erkennung und Wiedererkennung von sich bewegenden Objekten, insbesondere von Kraftfahrzeugen, wobei die Vorrichtung mindestens eine Kamera und eine Bildverarbeitungseinheit umfasst, wobei mittels der Kamera periodisch ein fester Bildbereich aufnehmbar ist, in dem Bildbereich mindestens eine Region of Interest definiert ist, die ein Vielfaches kleiner als der Bildbereich ist, in der Bildverarbeitungseinheit modifizierte Bilder der real aufgenommenen Bilder durch arithmetische Verknüpfungen und/oder Filterfunktionen erzeugbar sind, aus den modifizierten Bildern Fahrzeughypothesenbereiche bestimmbar sind, aus denen Fahrzeuge detektierbar sind, die detektierten Fahrzeuge anhand von Fahrzeugprototypen klassifizierbar sind und mindestens ein weiteres Objekt-Attribut ermittelbar ist, wobei die Daten eines klassifizierten Objektes und des Objekt-Attributes an eine Zentrale und/oder benachbarte Kamera übertragbar sind, wo eine Wiedererkennung des Fahrzeuges erfolgt.

Die Druckschrift DE 10 2013 212 495 A1 betrifft ein Verfahren zum Bereitstellen eines Bildes einer Fläche, einschließlich einer konturierten Fläche, wie beispielsweise des Unterbodens eines Kraftfahrzeugs, mit wenigstens einer Bildaufnahmevorrichtung, wobei das Verfahren die folgenden Schritte ausführt:
a) Aufnehmen von Bildern eines oder mehrerer Bereiche der Fläche mit unterschiedlicher Belichtung und/oder Beleuchtung;
b) Erzeugen eines optimierten Bildes für jeden der Bereiche aus den mehreren aufgenommenen Bildern; und
c) Zusammensetzen der für die einzelnen Bereiche der Fläche erzeugten optimierten Bilder zu einem optimierten Gesamtbild der Fläche.

Die Druckschrift WO 2012/103193 A1 beschreibt ein Rückfahrkamerasystem für ein Kraftfahrzeug mit einer nach hinten gerichteten Kamera, die an einem rückwärtigen Teil des Fahrzeugs angeordnet ist. Dabei erstellt die nach hinten gerichtete Kamera rückwärtige Bilder des so ausgerüsteten Fahrzeugs. Ist ein Anhänger an das Fahrzeug angehängt, womit sich der Anhänger sich im rückwärtigen Bereich des Fahrzeugs befindet, so verarbeitet ein Prozessor die rückwärtigen Bilder und aufgrund der Verarbeitung kann der Knickwinkel des Anhängers relativ zur Fahrzeuglängsachse bestimmt werden. Dabei kann die Verarbeitung der Bilddaten im HSV-Farbraum erfolgen, wobei die Belichtungszeit der Kamera als Funktion der Bildqualität gesteuert werden kann.

Die Druckschrift DE 10 2011 101 990 B3 betrifft ein Verfahren und eine Vorrichtung zur Bestimmung eines relativen Deichselwinkels in einem Gliederzug, wobei der Gliederzug ein Zugteil und einen Anhänger umfasst. Dabei sind der Zugteil und der Anhänger über eine drehbar gelagerte Deichsel mechanisch gekoppelt, wobei die Vorrichtung mindestens eine Einrichtung zur Bilderfassung und mindestens eine Auswerteeinrichtung umfasst. Die Einrichtung zur Bilderfassung erfasst ein 2-dimensionales Bild, wobei in dem Bild zumindest ein Teil der Deichsel abgebildet wird. Mittels der Auswerteeinrichtung wird zu einem 1. Zeitpunkt in einem ersten Bild ein erster Intensitäts- und/oder Farbverlauf entlang mindestens einer ersten Trajektorie bestimmt, wobei die 1. Trajektorie einen Kreisbogen um einen Drehpunkt der Deichsel abbildet. Zu mindestens einem weiteren Zeitpunkt wird in einem weiteren Bild ein weiterer Intensitäts- und/oder Farbverlauf entlang der ersten Trajektorie bestimmt, wobei ein Ähnlichkeitsmaß zwischen dem ersten Intensitäts- und oder Farbverlauf entlang der mindestens ersten Trajektorie in dem ersten Bild und zu einer Anzahl verschobener weiterer Intensitäts- und/oder Farbverläufe entlang der ersten 3 Victoria in dem weiteren Bild bestimmt wird, wobei der relative Deichselwinkel als Funktion des Ähnlichkeitsmaßes ermittelt wird.

Die Druckschrift WO 2016/119920 A1 betrifft ein Verfahren und eine Vorrichtung zur Wiedererkennung eines Anhängers eines Gespanns. Dabei werden zur Wiedererkennung eines Anhängers, welcher an einem Fahrzeug angehängt ist, die folgenden Schritte ausgeführt:
- Erfassen eines Bildes, welches zumindest einen Teil des Anhängers beinhaltet,
- extrahieren mindestens eines Merkmals des Anhängers aus dem Bild,
- Bestimmen des Anhängers als einen bekannten Anhänger, wenn das mindestens eine Merkmal mit einem abgespeicherten Muster des bekannten Anhängers übereinstimmt.

Bei fortschrittlichen Kamerasystemen wird die Methode der Belichtungsserien eingesetzt, um auch bei schwierigen Lichtverhältnissen ausreichend gut belichtete Bilder mit wenig Rauschen zu erhalten, was unter dem Stichwort HDR-Fotografie bekannt ist. Dieser Ansatz wird auch bei Automotive-Kameraherstellern eingesetzt, um eine Verbesserung der Nachtperformance des Kamerasystems zu erreichen. Moderne Sensoren sind hier in der Lage, mehrere Bilder mit unterschiedlichen Belichtungszeiten kurzfristig hintereinander, also quasi parallel, aufzunehmen und noch im Sensor zusammenzusetzen. Die bisherigen Lösungen beziehen sich auf die Verbesserung der Bilddaten bei schwierigen Lichtverhältnissen im Besonderen bei Nacht.

Der Erfindung liegt daher die Aufgabe zugrunde, bei Anhängerrangierassistenten die Erkennung der Deichsel und damit die Ermittlung des Knickwinkels auch bei schlechten Sichtverhältnissen zu verbessern.

Diese Aufgabe wird durch ein Verfahren zur Ermittlung des Knickwinkels eines Gespanns mit den Merkmalen des Anspruchs 1, durch eine entsprechende Vorrichtung mit den Merkmalen des Anspruchs 4 sowie durch die Verwendung der entsprechenden Vorrichtung mit den Merkmalen des Anspruchs 6 gelöst. Bevorzugte Ausführungsformen der Erfindung sind Gegenstand der Unteransprüche.

Das erfindungsgemäße Verfahren zur Ermittlung des Knickwinkels eines Gespanns bestehend aus einem Zugfahrzeug und einem mit einer Deichsel angehängten Anhänger durch Erkennung der Anhängerdeichsel mit einer digitalen Rückfahrkamera mit variablen Belichtungszeiten, führt die folgenden Schritte aus:
a) Aufnehmen eines ersten Farbbildes der rückwärtigen Umgebung des Zugfahrzeugs, wobei dem Farbbild der HSV-Farbraum zugrunde liegt,
b) Untersuchen der Farbwerte H, Sättigungswerte S und Helligkeitswerte V benachbarter Flächen eines auszuwertenden Bereichs des Fahrzeugumfelds,
c) Bestimmen der Deichsel aus dem ersten Farbbild mittels eines Kantendetektionsverfahren zur Ermittlung des Knickwinkels, falls die Farbwerte H, Sättigungswerte S und Helligkeitswerte V benachbarter Flächen im auszuwertenden Bereich im Wesentlichen gleich sind, wobei im Wesentlichen gleich dadurch definiert ist, dass sich die jeweiligen Farbwerte H, Sättigungswerte S und Helligkeitswerte V benachbarter Flächen um maximal eine erste Schwelle in Prozent unterscheiden,
d) Aufnehmen eines zweiten Bildes im HSV-Farbraum, falls im ersten Farbbild die Farbwerte H und Sättigungswerte S benachbarter Flächen im auszuwertenden Bereich im Wesentlichen gleich sind, während die Helligkeitswerte V der benachbarten Flächen stark voneinander abweichen, wobei stark voneinander abweichen dadurch definiert ist, dass die Helligkeitswerte V benachbarter Flächen sich um mehr als eine zweite Schwelle in Prozent voneinander unterscheiden, wobei die Belichtungszeit des zweiten Farbbildes so gewählt wird, dass die Helligkeitswerte V der benachbarten Flächen innerhalb des auszuwertenden Bereichs des Fahrzeugumfelds im Wesentlichen gleich sind,
e) Bestimmen der Deichsel aus dem zweiten Farbbild mittels eines Kantendetektionsverfahren zur Ermittlung des Knickwinkels.

Bei dem erfindungsgemäßen Verfahren werden also zwei Bilder zeitlich sequenziell mit unterschiedlichen Belichtungen aufgezeichnet und der nachfolgenden Bearbeitungskette zur Verfügung gestellt. Dadurch ist es möglich Schlagschattenelemente im Bild besser von zu detektierenden Objekten bzw. Kanten zu separieren und dadurch die Performance der Kantendetektion zu verbessern.

Ist kein Schlagschatten vorhanden, kann die Kantendetektion im ersten Bild erfolgen. Das Fehlen von Schlagschatten kann durch den Vergleich der Werte für Farbe H, Sättigung S und Helligkeit V benachbarter Bereiche der auszuwertenden Fläche mit der Bedingung, dass die Abweichung kleiner als eine vorgegebene erste Prozentschwelle, bestimmt werden.

Ist ein Schlagschatten im Bild vorhanden, was mit dem Vergleich ermittelt wird, dass sich die Helligkeitswerte V benachbarter Flächen des auszuwertenden Bereichs um mehr als eine vorgegebene zweite Prozentschwelle unterscheiden, so wird die Belichtungszeit für das nachfolgende Bild so verändert, dass die Helligkeitswerte V der benachbarten Flächen nun im Wesentlichen gleich sind, wobei im Wesentlichen gleich wieder bedeutet, dass die Unterschiede in den Helligkeitswerten V der benachbarten Flächen maximal gleich der ersten Prozentschwelle sein dürfen.

Dabei wird für die erste Schwelle ein Wert von 1 % und für die zweite Schwelle ein Wert von 10%ode größer eingesetzt. Andere Schwellwerte können entsprechend den Notwendigkeiten einer sicheren Kantendetektion zur Bestimmung des Knickwinkels gewählt werden.

Vorzugsweise umfasst der auszuwertende Bereich die befahrbare Fläche im Umfeld oder Bereich der Deichsel. Auf diese Weise wird erreicht, dass nur der Umfeldbereich der Deichsel zur Betrachtung herangezogen wird, da nur in diesem Bereich ein Schlagschatten die Detektion der Deichsel behindert.

Weiter bevorzugt wird eine HDR-fähige Rückfahrkamera verwendet, die eine quasiparalle Aufnahme mehrerer Bilder unterschiedlicher Belichtungszeiten ermöglicht.

Die erfindungsgemäße Vorrichtung zur Ermittlung des Knickwinkels eines Gespanns bestehend aus einem Zugfahrzeug und einem mit einer Deichsel angehängten Anhänger, wobei die Vorrichtung zur Durchführung des im Vorangegangenen erläuterten Verfahrens eingerichtet und ausgelegt ist, umfasst
- eine Rückfahrkamera mit variablen Belichtungszeiten zur Erzeugung von Farbbildern zur Beobachtung des rückwärtigen Umfelds des Zugfahrzeugs,
- eine Einrichtung zur Transformation der aufgenommenen Farbbilder in den HSV-Farbraum,
- eine Einrichtung zum Vergleichen der Farbwerte H, Helligkeitswerte V und Sättigungswerte S benachbarter Flächen in einem auszuwertenden Bereich der HSV-transformierten Farbbilder,
- eine Einrichtung zum Berechnen einer Belichtungszeit als Funktion der Vergleiche der Farbwerte H, Sättigungswerte S und Helligkeitswerte V benachbarter Flächen des auszuwertenden Bereichs, und
- eine Einrichtung zur Bestimmung des Knickwinkels durch ein Kantendetektionsverfahren aus den Farbbildern.

Vorzugsweise wird eine HDR-fähige Rückfahrkamera verwendet. Dabei können Kamerasysteme zum Einsatz kommen, die alle Daten parallel aufzeichnen oder die Aufzeichnung sequenziell mit einer Frequenz von 60 Hz erfolgt.

Die obige Erfindung führt zur verbesserten Trennbarkeit von Schlagschattenelementen und Objekten beziehungsweise Kanten in Bilddaten. Mit Hilfe der zwei unterschiedlich belichteten Farbbilder ist es erstmals möglich, der Kantendetektion mehr Bildinformation zur Verfügung zu stellen, um auf diese Weise eine schärfere Trennung zwischen Schlagschatten und dem zu detektierenden Objekt zu erreichen. Dies verbessert die Robustheit der Kantendetektion beim Anhängerrangierassistenten erheblich.

Ein Schatten im Bild, beispielsweise auf Asphalt, lässt sich daher detektieren, indem der HSV-Farbraum betrachtet wird. Die An- und Abwesenheit von Schatten zeigt sich insbesondere im V-Kanal des Bildes, d.h. der Helligkeitsstufe, während der Farbwert H und die Sättigung S gleichbleiben. Ein aufgenommenes Bild zum Zeitpunkt t kann nun dahingehend geprüft werden, ob benachbarte Flächen im auszuwertenden Bereich annähernd denselben H und S Wert aufweisen, während der Wert für V eine starke Abweichung zeigt.

Ist dies der Fall, so wird die Belichtungssteuerung der Kamera für das nächste Bild so programmiert, dass die Belichtungen der einzelnen aufgenommenen Bilder so abgestimmt werden, dass die benachbarten Flächen denselben Helligkeitswert erhalten. Damit ist der Schatten theoretisch herausgerechnet.

Vorzugsweise wird die erfindungsgemäße Vorrichtung in einem Anhängerrangierassistenten eingesetzt. Beim Rangiervorgang mit dem Anhängerrangierassistent unter Umweltbedingungen mit starkem Sonneneinfall und daraus resultierendem starkem Schlagschatten kann der Kantendetektor besser zwischen Anhängerdeichsel und Schlagschatten, welcher durch das Verfahren stark abgeschwächt oder gar nicht mehr sichtbar ist, unterscheiden. Durch die Eliminierung der Schlagschattens wird beim Rangieren durch die Kantendetektion nicht die Bewegung des Schlagschattens verfolgt, sondern, wie gewünscht, die Bewegung der Deichsel des Anhängers. Dies führt zu einer verbesserten Systemperformance des Anhängerrangierassistenten.

Eine bevorzugte Ausführungsform der Erfindung wird nachfolgend anhand der Zeichnungen erläutert. dabei zeigt
- Fig. 1: das Bild der Rückfahrkamera eines Fahrzeugs mit Schlagschatten, und
- Fig. 2: das gleiche Bild der Rückfahrkamera mit veränderter Belichtungszeit ohne Schlagschatten, und
- Fig. 3: die Vorrichtung zur Bestimmung des Knickwinkels in schematischer Darstellung.

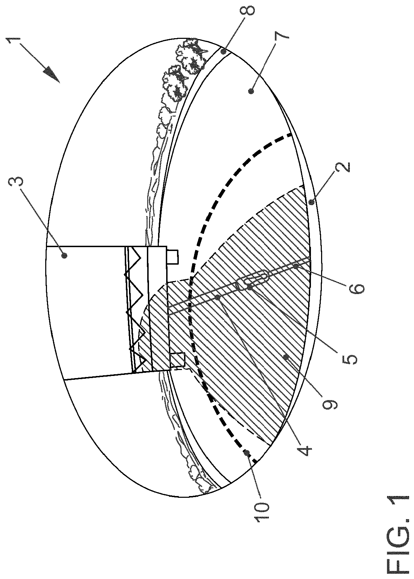

Fig. 1 zeigt ein typisches Bild einer Rückfahrkamera eines Fahrzeugs, wie sie bei einem Anhängerrangierassistenten zum Einsatz kommt. Die Rückfahrkamera nimmt ein Bild der rückwärtigen Umgebung 1 eines Fahrzeugs auf, wobei von dem Fahrzeug am unteren Rand des Bildes nur ein Teil der Heckpartie 2 erkennbar ist. Da die Rückfahrkamera mit einem Weitwinkelobjektiv versehen ist, ist im Bild die rückwärtige Umgebung 1 entsprechend verzerrt dargestellt. Im Bild der Rückfahrkamera ist ein Anhänger 3 zu erkennen, der mit einer Deichsel 4 mittels einer Kupplung 5 mit der Anhängerkupplung 6 des Fahrzeugs verbunden ist. Der Anhänger 3 befindet sich auf einer befahrbaren Fläche 7, die von Grünbewuchs 8 begrenzt ist. Die befahrbare Fläche 7, die beispielsweise einen Asphaltbelag aufweist, hat eine einheitliche Farbe. Allerdings fällt ein sogenannter Schlagschatten 9, der beispielsweise von dem Fahrzeug und einer tiefstehenden Sonne verursacht sein kann, im Beispiel der Fig. 1 auf die Deichsel 4, Teile der befahrbaren Fläche 7 zwischen dem Anhänger 3 und dem Fahrzeug sowie auf die Rückseite des Anhängers3, wobei der Schlagschatten in der Fig. 1 gestrichelt dargestellt ist. Der Schlagschatten 9 auf der Deichsel 4 führt dazu, dass die Deichsel 4 im Bild der Fig. 1 schlecht zu erkennen ist und daher Kantendetektionsverfahren zur Bestimmung des Knickwinkels des Anhängers versagen können und anstelle der Bewegung der Deichsel die Bewegung der Kante des Schlagschattens 9 verfolgt.

Betrachtet man den Schlagschatten 9 auf der befahrbaren Fläche 7, so bewirkt der Schlagschatten 9 eine Verdunklung der befahrbaren Fläche 7, wobei die Farbe der befahrbaren Fläche 7, im Beispiel diejenige eines hellen Asphalts, nicht verändert wird. Im HSV-Farbraum bedeutet dies, dass sich die Anwesenheit bzw. Abwesenheit von Schatten insbesondere im V Kanal des Bildes, der die Helligkeitsstufe repräsentiert, zeigt, während der Farbwert H und die Sättigung S im Wesentlichen gleich bleiben. Im Wesentlichen gleich wird durch ein erste Schwelle in Prozent, erfindungsgemäß 1 %, definiert, wobei die Unterschiede der betrachteten Werte kleiner oder gleich der ersten Schwelle sein müssen. Ein aufgenommenes Farbbild zum Zeitpunkt t kann nun dahingehend geprüft werden, ob benachbarte Flächen im auszuwertenden Bereich 10, der auch als Region of Interest (ROI) bezeichnet wird, annähernd denselben H und S Wert aufweisen, während der V Wert eine starke Abweichung zeigt. Der auszuwertende Bereich 10 ist in Fig. 1 schematisch als der befahrbare Bereich dargestellt, der die Umgebung der Deichsel 4 mit der Anhängerkupplung 6 umfasst. Der Begriff "starke Abweichung" wird über eine zweite Schwelle in Prozent definiert, die erfindungsgemäß 10 % oder mehr beträgt und bedeutet, dass zwei Werte stark voneinander abweichen, wenn sie sich um mehr als die zweite Schwelle unterscheiden. Der Wert von 10 % für die zweite Schwelle ist nicht absolut zu betrachten, sondern kann entsprechend den Bedürfnissen gewählt werden. Je größer die zweite Schwelle gewählt wird, umso größer ist der Helligkeitssprung zwischen dem Schlagschatten und der befahrbaren Fläche.

Dies ist im auszuwertenden Bereich 10 der Fall, da der ein Teil der befahrbaren Fläche 7 abdeckende Schlagschatten 9 einen deutlich anderen V-Wert als der Rest der befahrbaren Fläche 7 innerhalb des auszuwertenden Bereichs 10 aufweist. Für das nächste Bild der Rückfahrkamera zum Zeitpunkt t+1 wird die Belichtungssteuerung so programmiert, dass eine Abstimmung der Belichtung dergestalt erfolgt, dass die benachbarten Flächen denselben Helligkeitswert V erhalten. Dies sind innerhalb des auswertbaren Bereichs 10 im vorliegenden Fall die außerhalb des Schlagschatten 9 liegende befahrbare Fläche 7 und der Schlagschatten 9.

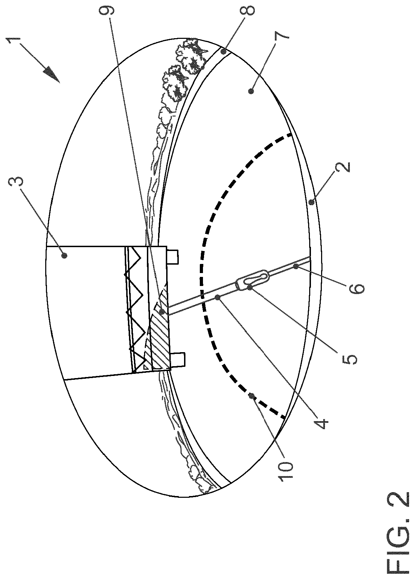

Fig. 2 zeigt das nachfolgende Bild, bei dem die Belichtung so gewählt ist, dass der Helligkeitswert V für die befahrbare Fläche 7 und für den Schlagschatten 9 denselben Wert aufweist. Dadurch verschwindet der der Schlagschatten 9 auf der befahrbaren Fläche 7 und tritt nur noch in veränderter Form im rückwärtigen Bereich des Anhängers 3 auf. Auf diese Weise ist nun die Deichsel 4 gegenüber der befahrbaren Fläche 7 deutlich zu erkennen, so dass die Bestimmung des Knickwinkels der Anhängerdeichsel 4 gegenüber dem Zugfahrzeug möglich ist.

Beim Rangiervorgang mit dem Anhängerrangierassistent unter Umweltbedingungen mit starkem Sonneneinfall und daraus resultierenden starkem Schlagschatten 9 kann der Kantendetektor besser zwischen Anhängerdeichsel 4 und Schlagschatten 9, welcher stark abgeschwächt oder gar nicht mehr sichtbar ist, unterscheiden. Daher wird beim Rangieren nicht die Bewegung des Schlagschattens 9 verfolgt, sondern, wie gewünscht, diejenige der Deichsel 4 des Anhängers. Dies führt zu einer verbesserten Systemperformance des Anhängerrangierassistenten.

Durch die zwei unterschiedlich belichteten Bilder sind nun Informationen in den Bilddaten gegeben, die für eine optimale und robuste Kantendetektion auch bei Schattenwurf nötig sind.

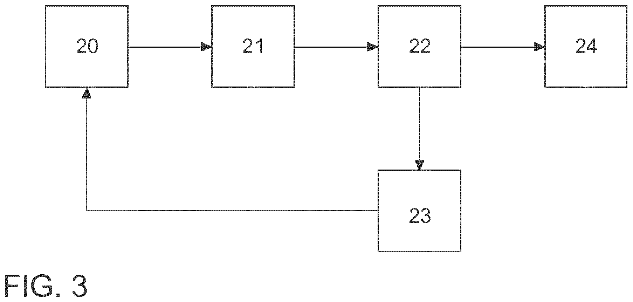

Fig. 3 zeigt die Vorrichtung zur Ermittlung des Knickwinkels eines Gespanns bestehend aus einem Zugfahrzeug und einem mit einer Deichsel angehängten Anhänger mit einer Rückfahrkamera 20, deren Bilder in einer Transformationseinrichtung 21 in den HSV-Farbraum transformiert werden. In einer Vergleichseinrichtung 22 werden in einem vorbestimmten Umfeldbereich der Kamera 20 die Farbwerte H, Sättigungswerte S und die Helligkeitswerte V benachbarter Flächen verglichen und als Funktion des Vergleichs wird in einer Belichtungszeiteinrichtung 23 eine geeignete Belichtungszeit bestimmt, die der Kamera 20 zugeführt wird. Geeignete Farbbilder werden einer Einrichtung 24 zur Bestimmung des Knickwinkel mittels einer Kantendetektion der Deichsel zugeführt.

### Bezugszeichenliste

- 1: Umgebung
- 2: Heckpartie Zugfahrzeug
- 3: Anhänger
- 4: Deichsel
- 5: Kupplung
- 6: Anhängerkupplung Zugfahrzeug
- 7: befahrbare Fläche
- 8: Grünbewuchs am Rand der befahrbaren Fläche
- 9: Schlagschatten
- 10: auswertbarer Bereich - Region of Interest

- 20: Rückfahrkamera
- 21: HSV-Transformationseinrichtung
- 22: Vergleichseinrichtung
- 23: Einrichtung zur Bestimmung der Belichtungszeit
- 24: Einrichtung zur Bestimmung des Knickwinkels

## Patentansprüche

1. Verfahren zur Ermittlung des Knickwinkels eines Gespanns bestehend aus einem Zugfahrzeug und einem mit einer Deichsel (4) angehängten Anhänger (3) durch Erkennung der Anhängerdeichsel (4) mit einer digitalen Rückfahrkamera (20) mit variablen Belichtungszeiten, wobei das Verfahren die Schritte aufweist:
a) Aufnehmen eines ersten Farbbildes der rückwärtigen Umgebung des Zugfahrzeugs, wobei dem Farbbild der HSV-Farbraum zugrunde liegt,
b) Untersuchen der Farbwerte H, Sättigungswerte S und Helligkeitswerte V benachbarter Flächen eines auszuwertenden Bereichs (10) des Fahrzeugumfelds,
c) Bestimmen der Deichsel (4) aus dem ersten Farbbild mittels eines Kantendetektionsverfahren zur Ermittlung des Knickwinkels, falls die Farbwerte H, Sättigungswerte S und Helligkeitswerte benachbarter Flächen im auszuwertenden Bereich (10) im Wesentlichen gleich sind, wobei im Wesentlichen gleich dadurch definiert ist, dass sich die jeweiligen Farbwerte H, Sättigungswerte S und Helligkeitswerte V benachbarter Flächen um maximal eine erste Schwelle in Prozent unterscheiden, wobei die erste Schwelle 1 % beträgt,
d) Aufnehmen eines zweiten Bildes im HSV-Farbraum, falls im ersten Farbbild die Farbwerte H und Sättigungswerte S benachbarter Flächen im auszuwertenden Bereich (10) im Wesentlichen gleich sind, während die Helligkeitswerte V der benachbarten Flächen stark voneinander abweichen, wobei stark voneinander abweichen dadurch definiert ist, dass die Helligkeitswerte V benachbarter Flächen sich um mehr als eine zweite Schwelle in Prozent voneinander unterscheiden, wobei die Belichtungszeit des zweiten Farbbildes so gewählt wird, dass die Helligkeitswerte V der benachbarten Flächen innerhalb des auszuwertenden Bereichs (10) des Fahrzeugumfelds im Wesentlichen gleich sind, wobei die zweite Schwelle 10 % oder größer beträgt,
e) Bestimmen der Deichsel (4) aus dem zweiten Farbbild mittels eines Kantendetektionsverfahren zur Ermittlung des Knickwinkels.

2. Verfahren nach Anspruch 1, **dadurch gekennzeichnet, dass** der auszuwertende Bereich (10) die befahrbare Fläche (7) im Bereich der Deichsel (4) umfasst.

3. Verfahren nach einem der vorangegangenen Ansprüche, **dadurch gekennzeichnet, dass** eine HDR-fähige Rückfahrkamera verwendet wird.

4. Vorrichtung zur Ermittlung des Knickwinkels eines Gespanns bestehend aus einem Zugfahrzeug und einem mit einer Deichsel (4) angehängten Anhänger (3), wobei die Vorrichtung zur Durchführung des Verfahrens nach einem der vorangegangenen Ansprüche eingerichtet und ausgelegt ist, mit
einer Rückfahrkamera (20) mit variablen Belichtungszeiten zur Erzeugung von Farbbildern zur Beobachtung des rückwärtigen Umfelds des Zugfahrzeugs,
eine Einrichtung (21) zur Transformation der aufgenommenen Farbbilder in den HSV-Farbraum,
eine Einrichtung (22) zum Vergleichen der Farbwerte H, Helligkeitswerte V und Sättigungswerte S benachbarter Flächen in einem auszuwertenden Bereich (10) der HSV-transformierten Farbbilder,
eine Einrichtung (23) zum Berechnen einer Belichtungszeit als Funktion der Vergleiche der Farbwerte H, Sättigungswerte S und Helligkeitswerte V benachbarter Flächen des auszuwertenden Bereichs (10), und
eine Einrichtung (24) zur Bestimmung des Knickwinkels durch ein Kantendetektionsverfahren aus den Farbbildern.

5. Vorrichtung nach Anspruch 4, **dadurch gekennzeichnet, dass** eine HDR-fähige Rückfahrkamera (20) verwendet wird.

6. Verwendung der Vorrichtung nach einem der Ansprüche 4 oder 5 in einem Anhängerrangierassistenten.

## Claims

1. Method for ascertaining the articulation angle of a combination consisting of a towing vehicle and a trailer (3) attached using a drawbar (4) by detecting the trailer drawbar (4) using a digital rear-view camera (20) with variable exposure times, wherein the method includes the steps of:
a) recording a first colour image of the rearward environment of the towing vehicle, wherein the colour image is based on the HSV colour space,
b) examining the hues H, saturations S and values V of adjacent surfaces of a region (10) of the vehicle vicinity to be evaluated,
c) determining the drawbar (4) from the first colour image by means of an edge detection method for ascertaining the articulation angle if the hues H, saturations S and values of adjacent surfaces in the region (10) to be evaluated are substantially identical, wherein substantially identical is defined by the respective hues H, saturations S andmaxi values V of adjacent surfaces differing at most by a first threshold in percentages, with the first threshold being 1%,
d) recording a second image in the HSV colour space if the hues H and saturations S of adjacent surfaces in the region (10) to be evaluated in the first colour image are substantially identical while the values V of the adjacent surface differ greatly, wherein differing greatly is defined by the values V of adjacent surfaces differing by more than a second threshold in percentages, wherein the exposure time of the second colour image is selected such that the values V of the adjacent surfaces within the region (10) of the vehicle vicinity to be evaluated are substantially identical, with the second threshold being 10% or greater,
e) determining the drawbar (4) from the second colour image by means of an edge detection method for ascertaining the articulation angle.

2. Method according to Claim 1, **characterized in that** the region (10) to be evaluated comprises the driveable surface (7) in the region of the drawbar (4).

3. Method according to either of the preceding claims, **characterized in that** an HDR-enabled rear-view camera is used.

4. Apparatus for ascertaining the articulation angle of the combination consisting of a towing vehicle and a trailer (3) attached using a drawbar (4), wherein the apparatus for performing the method is set up and configured according to one of the preceding claims, having
a rear-view camera (20) with variable exposure times for generating colour images for observing the rearward vicinity of the towing vehicle,
a device (21) for transforming the recorded colour images to the HSV colour space,
a device (22) for comparing the hues H, values V and saturations S of adjacent surfaces in a region (10) of the HSV-transformed colour images to be evaluated,
a device (23) for computing an exposure time as a function of the comparisons of the hues H, saturations S and values V of adjacent surfaces of the region (10) to be evaluated, and
a device (24) for determining the articulation angle from the colour images by way of an edge detection method.

5. Apparatus according to Claim 4, **characterized in that** an HDR-enabled rear-view camera (20) is used.

6. Use of the apparatus according to either of Claims 4 and 5 in a trailer manoeuvring assistance system.

## Revendications

1. Procédé permettant d'établir l'angle d'articulation d'un attelage, composé d'un véhicule tracteur et d'une remorque (3) accrochée par une barre d'attelage (4), par la reconnaissance de la barre d'attelage de remorque (4) à l'aide d'une caméra de recul numérique (20) ayant des temps d'exposition variables, le procédé présentant les étapes consistant à :
a) enregistrer une première image en couleur de l'environnement arrière du véhicule tracteur, l'image en couleur étant basée sur l'espace de couleur HSV,
b) analyser les valeurs de couleur H, les valeurs de saturation S et les valeurs de luminosité V de surfaces voisines d'une zone à évaluer (10) de l'environnement du véhicule,
c) déterminer la barre d'attelage (4) à partir de la première image en couleur au moyen d'un procédé de détection de contours pour établir l'angle d'articulation si les valeurs de couleur H, les valeurs de saturation S et les valeurs de luminosité de surfaces voisines dans la zone à évaluer (10) sont substantiellement identiques, « substantiellement identiques » étant défini en ce que les valeurs de couleur H, les valeurs de saturation S et les valeurs de luminosité V respectives des surfaces voisines se distinguent au maximum d'un premier seuil en pourcentage, le premier seuil étant égal à 1 %,
d) enregistrer une deuxième image dans l'espace de couleur HSV si sur la première image en couleur les valeurs de couleur H et les valeurs de saturation S de surfaces voisines dans la zone à évaluer (10) sont substantiellement identiques, alors que les valeurs de luminosité V des surfaces voisines sont nettement différentes les unes des autres, « nettement différentes » étant défini en ce que les valeurs de luminosité V de surfaces voisines se distinguent les unes des autres de plus qu'un deuxième seuil en pourcentage, le temps d'exposition de la deuxième image en couleur étant sélectionné de telle sorte que les valeurs de luminosité V des surfaces voisines à l'intérieur de la zone à évaluer (10) de l'environnement du véhicule sont substantiellement identiques, le deuxième seuil étant égal à 10 % ou plus,
e) déterminer la barre d'attelage (4) à partir de la deuxième image couleur au moyen d'un procédé de détection de contours pour établir l'angle d'articulation.

2. Procédé selon la revendication 1, **caractérisé en ce que** la zone à évaluer (10) comprend la surface praticable (7) dans la zone de la barre d'attelage (4).

3. Procédé selon l'une quelconque des revendications précédentes, **caractérisé en ce qu'**une caméra de recul avec mode HDR est utilisée.

4. Dispositif permettant d'établir l'angle d'articulation d'un attelage, composé d'un véhicule tracteur et d'une remorque (3) accrochée par une barre d'attelage (4), le dispositif étant aménagé et conçu pour exécuter le procédé selon l'une quelconque des revendications précédentes, comprenant
une caméra de recul (20) ayant des temps d'exposition variables pour générer des images en couleur destinées à observer l'environnement arrière du véhicule tracteur,
un équipement (21) destiné à convertir les images en couleur enregistrées en espace de couleur HSV,
un équipement (22) destiné à comparer les valeurs de couleur H, les valeurs de luminosité V et les valeurs de saturation S de surfaces voisines dans une zone à évaluer (10) des images en couleur converties HSV,
un équipement (23) destiné à calculer un temps d'exposition en fonction des comparaisons des valeurs de couleur H, des valeurs de saturation S et des valeurs de luminosité V de surfaces voisines de la zone à évaluer (10), et
un équipement (24) destiné à déterminer l'angle d'articulation par un procédé de détection de contours à partir des images en couleur.

5. Dispositif selon la revendication 4, **caractérisé en ce qu'**une caméra de recul avec mode HDR (20) est utilisée.

6. Utilisation du dispositif selon l'une quelconque des revendications 4 ou 5 dans un assistant de manœuvre de remorque.
